## Europäisches Patentamt

(19) **European Patent Office**

**Office européen des brevets**

(11) Publication number: **0 195 563**
**B1**

(12) # EUROPEAN PATENT SPECIFICATION

(45) Date of publication of the patent specification:
**13.09.89**

(51) Int. Cl.⁴: **H 04 N 1/40**

(21) Application number: **86301600.2**

(22) Date of filling: **06.03.86**

(54) **Image processing.**

(30) Priority: **18.03.85 GB 8506931**

(43) Date of publication of application:
**24.09.86 Bulletin 86/39**

(45) Publication of the grant of the patent:
**13.09.89 Bulletin 89/37**

(84) Designated Contracting States:
**DE GB**

(56) References cited:
**EP-A-0 074 795**

**IEEE TRANSACTIONS ON COMMUNICATIONS,
vol. COM-29, no. 12, December 1981, pages 1898-
1925, IEEE, New York, US; J.C. STOFFEL et al.: "A
survey of electronic techniques for pictorial image
reproduction"**

(73) Proprietor: **CROSFIELD ELECTRONICS LIMITED,
De La Rue House 3/5 Burlington Gardens,
London W1A 1DL (GB)**

(72) Inventor: **Reed, Alastair, 5 The Gables Linslade,
Leighton Buzzard Bedfordshire LU7 7PQ (GB)**

(74) Representative: **Skone James, Robert Edmund,
GILL JENNINGS & EVERY 53- 64 Chancery Lane,
London WC2A 1HN (GB)**

LIBER, STOCKHOLM 1989

## Description

The invention relates to methods and apparatus for processing a first image represented by digital data and constituted by a second image convolved with a periodic function, to produce the second image.

In the printing industry, there is a common requirement to produce for example rotogravure cylinders from offset print originals. This is desirable economically in order to produce master prints at low cost. However, the offset prints which are half-tone images produced by applying a screen to a continuous tone original image consist of a dot raster and since this raster cannot in general be exactly conformed with the raster of the rotogravure cylinder, unwanted moire patterns can be generated. Various attempts have been made in the past to deal with this problem by optically descreening the half-tone original. These have generally resulted in a blurred image being produced which is clearly undesirable.

One attempt at dealing with this problem is described in IEEE Transactions on Communications vol COM-29 No 12, p 1917. A digital filter is described which suppresses certain screen frequencies but is not efficient for other screen frequencies. In addition it passes very high frequencies leading to the artefacts mentioned in the paper.

In accordance with one aspect of the present invention, apparatus for processing a first image represented by digital data and constituted by a second image convolved with a periodic function, to produce the second image, comprises means for determining a frequency filter characteristic adapted substantially to suppress the frequency or frequencies of the periodic function; a store for storing digital data defining the frequency filter characteristic; and control means for applying the filter characteristic to the digital data representing the first image to generate digital data representing the second image.

In accordance with a second aspect of the present invention, a method of processing a first image represented by digital data and constituted by a second image convolved with a periodic function, to produce the second image, comprises generating in accordance with the frequency or frequencies of the periodic function digital data defining a frequency filter characteristic adapted substantially to suppress the frequency or frequencies of the periodic function, and storing the data; and applying the filter characteristic to the digital data representing the first image to generate digital data representing the second image.

We have recognised that an image which is screened or includes a regular pattern consists to a good approximation of two components, the continuous image multiplied by a periodic screen function or pattern. This will be explained in more detail below. By definition, the screen frequencies will be at least twice as high as the image information and thus the dot structure can be suppressed by suitable filtering.

We provide a dynamic system in which the filter characteristic is determined in accordance with the frequency to be suppressed. Thus an efficient filter will always result.

The invention is particularly suitable for handling half-tone images and these may have been generated for example using conventional analyse scanners or totally electronically. In any event, they will represent the convolution of a second image with a periodic function. Typically, the second image will be a continuous tone image and the periodic function a screen. The invention can be used, however, to remove other regular frequencies. In the former case the result of the application step is that at least the screen frequency or frequencies is suppressed and digital data is generated representing the continuous tone image.

If the filter characteristic and half-tone image are both defined in the spatial domain, the applying step may comprise convolving the digital data representing the half-tone image with the digital filter data.

One of the problems with convolving the filter characteristic with a half-tone image is the length of time involved. A typical A4 page represented digitally will include a very large number of pixels on each of which a complex computation must be carried out.

Preferably, therefore, the stored digital data defines the filter characteristic in the frequency domain, the step of applying the filter characteristic comprising transforming the half-tone image into the frequency domain to generate transformed image digital data, multiplying the transformed image digital data by the digital filter data to generate filtered digital data, and transforming the filtered digital data back into the spatial domain.

The advantage of working in the frequency domain is that the number of computations required is significantly reduced. Conventional transformation circuitry such as fast Fourier transform circuits can be used and descreening is achieved at a comparatively high speed.

A simple low pass filter having a top hat characteristic is not generally acceptable. We have analysed the reason for this and have discovered that when the filter characteristics are transformed into the spatial domain, they exhibit a significant degree of ringing. Preferably, therefore the filter characteristic has a smooth termination in the frequency domain.

Preferably, the generating step comprises generating an exponential filter of the form $y = k \exp(-x/\sigma)^n$

where y is related to the degree of transmission

k is a constant

x is a frequency, and

σ is the half width of the exponential

and determining a such that when x is set to the frequency to be suppressed $y/y_{max}$ is less than a predetermined value. $y_{max}$ is the value of y corresponding to maximum transmission.

It will be appreciated that the control means could be provided by suitable hardware circuits or by a suitably programmed computer.

In the case of coloured images, the invention will be applied to each colour separation.

In one example, the filter characteristic defines a circularly symmetric low pass filter. The advantage of such a filter is that it can be applied to all colour separations, where the half-tone image is represented by a number of colour separations, since the filter is independent of screen angle and is therefore straightforward to implement.

A suitable filter characteristic is an exponential low pass filter of order 5. This has been found to transmit most of the picture information and to introduce negligible ringing and so is particularly suitable for suppressing screen frequencies.

In another example, the filter characteristic can define an ideal low pass filter determined experimentally to exactly filter out the screen frequency or frequencies. This would give slightly improved resolution over the circularly symmetric low pass filter since higher frequencies are transmitted and is suitable for removing regular, non-screen frequencies.

Preferably, the filter characteristic prevents the passage of frequencies above the frequency or frequencies of the periodic function and most preferably prevents the passage of substantially all these higher frequencies.

Some examples of methods and apparatus in accordance with the invention will now be described and contrasted with the use of unsuitable filters with reference to the accompanying drawings, in which;

Figures 1A and 1B illustrate a screened image in the spatial domain and frequency domain respectively;

Figure 2 illustrates the transmission characteristic of two exponential low pass filters in the frequency domain;

Figure 3 illustrates a top hat function low pass filter together with its inverse Fourier transform;

Figure 4 illustrates an order 5 exponential filter with its inverse Fourier transform;

Figure 5 illustrates the average power spectrum in two dimensions in the frequency domain;

Figure 6 illustrates the average power spectrum in one dimension in the frequency domain;

Figure 7 illustrates the filter power spectrum in one dimension; and,

Figures 8A and 8B illustrate in block diagram form two examples of apparatus according to the invention.

A screened image ($I_{screen}$) consists to a good approximation of two components, a continuous image ($I_{cont}$) multiplied by a screen ($S_{grid}$).

Thus:

$I_{screen}$ (x,y) = $I_{cont}$ (x,y). $S_{grid}$ (x,y).

where $S_{grid}$ (x,y) = $C_{comb}$ (x,y) *$D_{dot}$ (x,y)

where $C_{comb}$ is a two dimensional comb filter, $D_{dot}$ is a function which converts the sampled grey level to a dot of variable size (see D. Kermisch and P. C. Roetling, Journal of the Optical Society of America 65, 716 (1975)), and * signifies convolution.

Taking the Fourier transform

$$\bar{I}_{screen} \ (u, v) = \bar{I}_{cont} \ (u,v) \ ^* \ \bar{C}_{comb} \ (u,v). \ \bar{D}_{dot} \ (u,v).$$

since the Fourier transform of a two dimensional comb filter is another two dimensional comb.

In other words the picture information is convolved with a two dimensional comb which is modulated by a slowly varying function $D_{dot}$. By definition, the screen frequencies are at least twice as high as the picture information.

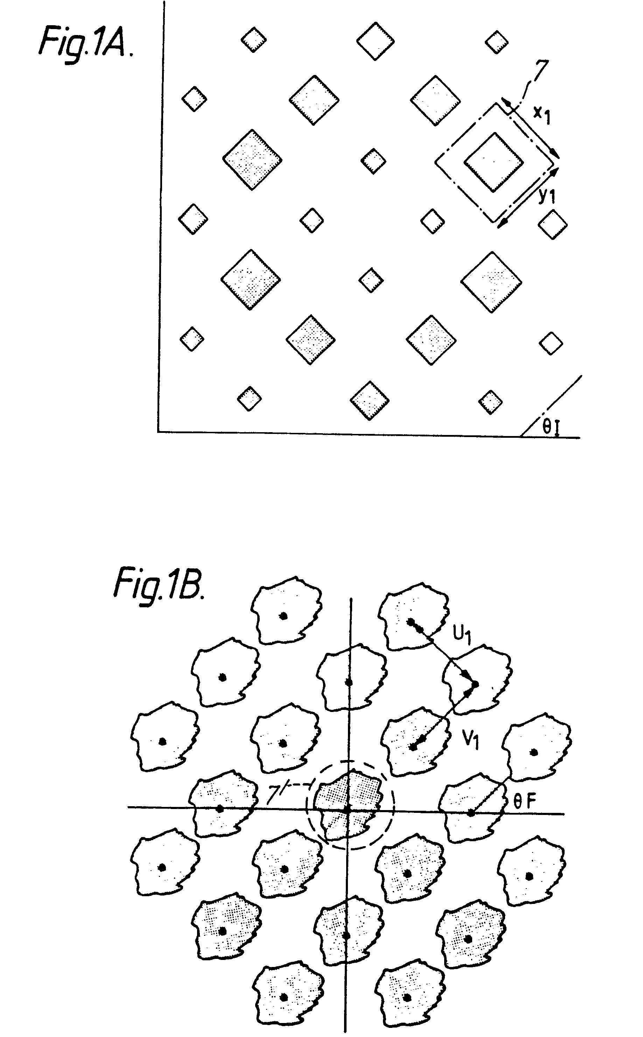

Figure 1A illustrates a small portion of a screened image in the image or spatial domain. Each stippled square is a half-tone dot, the sizes varying according to the colour densities of pixels in the continuous tone image. Figure 1B illustrates the Fourier transform (power spectrum) of the screened image in two dimensions. The dot structure can be suppressed by applying a suitable low pass filter in the frequency domain to transmit the picture information only. The radius of the filter can be found from the power spectrum.

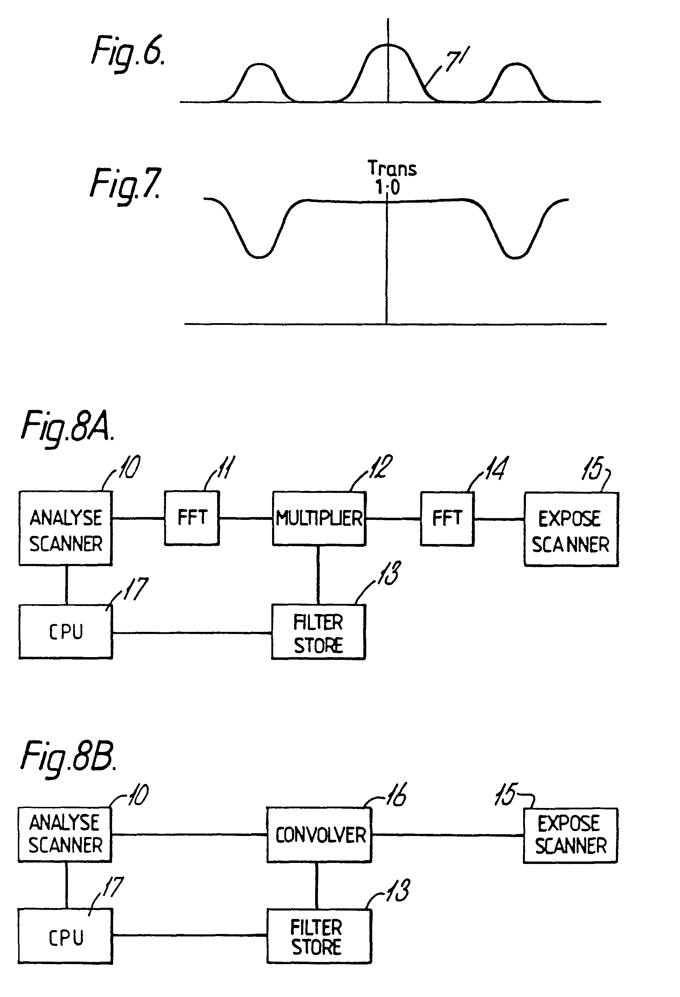

It will be noted in Figures 6 and 7 that the low pass filter is smoothly terminating in the frequency domain to minimise ringing in the image when the inverse transform is taken but allows substantially all image frequencies to pass.

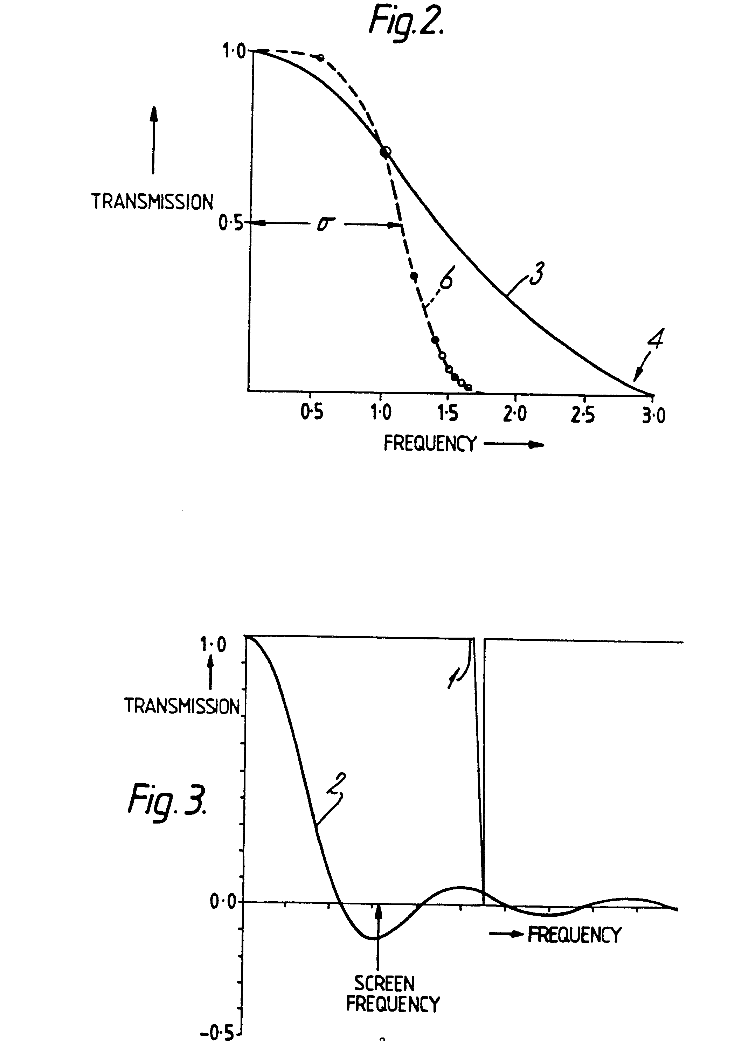

A top hat function 1 and its Fourier transform 2 is illustrated in Figure 3. This function introduces ringing in the spatial domain as expected theoretically, since the inverse transform of a top hat function is a two dimensional Bessel function due to its sharp terminations which is then convolved with the picture in image space. This will not produce a satisfactory result.

An ideal low pass filter ($F_{ILP}$) would be a mask as shown by the dotted line 7 in Figure 1A, convolved with the image in image space.

The mask has a transmission of 1 within it and zero everywhere else and a size related to the screen spacing.

$$I_{screen} \ (x,y) \ ^* \ F_{ILP} \ (x,y) = I_{cont} \ (x,y).$$

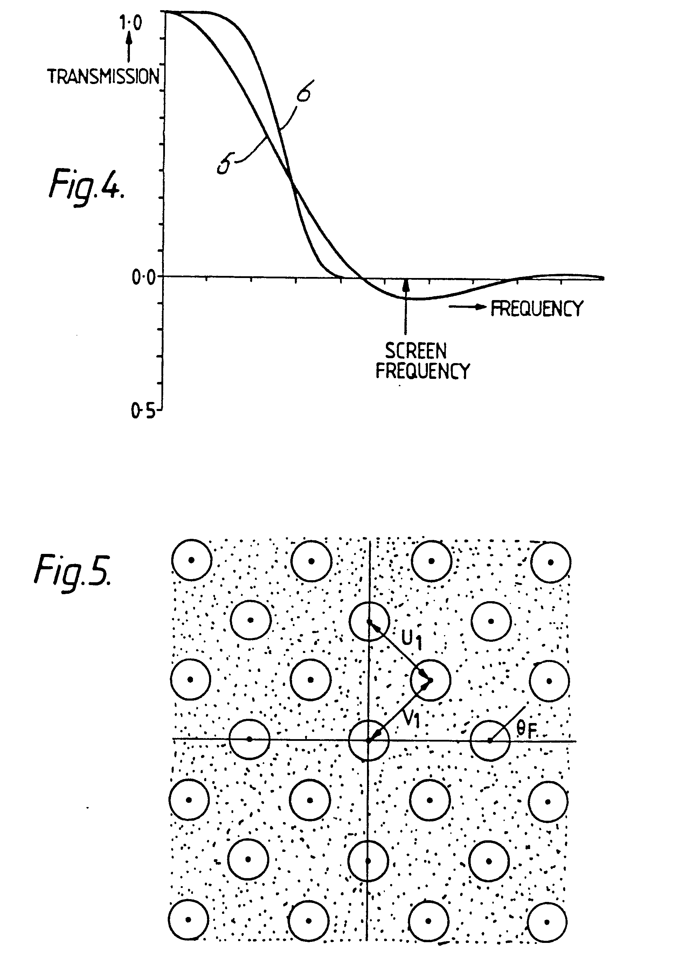

To construct this mask, the screen angle and spacing of the separation to be descreened is needed. This information can be obtained from the average power spectrum of the screened image (Figure 5), where

$$x_1 = I/u_1$$
$$y_1 = I/v_1$$
$$\theta_I = \theta_F$$

$x_1$, $y_1$ is the screen spacing in image space,

$\theta_I$ the screen angle in image space,

$u_1$, $v_1$ is the screen spacing in frequency space, and,

$\theta_F$ the screen angle in frequency space.

The screen information in frequency space can be used to generate automatically a filter of either the exponential or "ideal" kind, using the methods described below.

The ideal low pass filter ($F_{ILP}$) can be constructed in image space, transformed and applied in frequency (eg. Fourier) space in for example a suitably programmed microcomputer. The transformed filter ($\bar{F}_{ILP}$) then multiplies the transformed image ($\bar{I}_{screen}$) to yield the transformed continuous image ($\bar{I}_{cont}$).

Thus:

$$\bar{I}_{screen}(u,v) \cdot \bar{F}_{ILP}(u,v) = \bar{I}_{cont}(x,y).$$

Taking the inverse transform gives the continuous image.

$\bar{F}_{ILP}$ is a two dimensional sinc function which has zeros at the screen frequencies as illustrated by reference 7' in Figures 1B and 6. This function can be approximated in frequency space as follows. The picture is divided into blocks and the power spectra of these blocks are averaged. The picture information transform will vary from block to block, while the grid transform stays constant.

$$|\bar{I}_{screen}(u,v)| = |\bar{I}_{cont}(u,v)| \cdot |\bar{S}_{grid}(u,v)|$$

The average will then be the grid transform convolved with a circularly symmetrical function M (u,v) which is slowly varying compared to the screen. M (u,v) has a two dimensional Gaussian type distribution.

$$<|\bar{I}_{screen}(u,v)|> = \tilde{M}(u,v) \cdot <|\bar{S}_{grid}(u,v)|>$$

where $<\ >$ signifies the average.

and

$$<|\bar{S}_{grid}(u,v)|> = |\bar{S}_{grid}(u,v)|$$ since the screen has a regular structure across the picture.

The average power spectrum is of the form shown in Figure 5. A one dimensional cross-section is shown in Figure 6.

Using a radial threshold, low frequencies are set to zero. The resultant is then inverted to produce the screen filter as shown in one dimension in Figure 7.

$$\bar{S}_{grid}(u,v) \cdot \bar{S}_{grid}(u,v) = C$$
$$\text{filter}$$

where C is a constant

$$\bar{I}_{screen}(u,v) \cdot \bar{S}_{grid}(u,v) = C \cdot \bar{I}_{cont}(u,v)$$
$$\text{filter}$$

or in image space

$$I_{screen}(x,y) \cdot S_{grid}(x,y) = S(x,y) \cdot I_{cont}(x,y)$$

filter
$$= I_{cont}(x,y).$$

This method would be particularly useful when the background pattern had frequencies close to the rest of the image information and it is desired to remove the background pattern. The regular background would then be hard to identify in image or frequency space unless an average was taken.

In practice the minimum attenuation of the "valleys" in the Figure 7 characteristic will be set at or below a predetermined threshold. For example such that (min transmission)/(max transmission) $< 10^{-4}$.

Although the invention has been described in connection with the use of Fourier transforms other well known transforms could also be used.

An exponential filter characteristic of order 2 (reference numeral 3 in Figure 2) is acceptable since it has a smooth termination 4. Such a characteristic avoids ringing when transformed but will suppress quite low frequencies i.e. the picture could be blurred. In this example the characteristic has the form $y = \exp(-0.347(x/\sigma)^2)$

where      y is related to the degree of transmission

x is a frequency, and

$\sigma$ is the half width of the exponential.

We have found however that the transform 5 of an exponential filter of order 5 (of the form $y = \exp(-0.347(x/\sigma)^5$ reference numeral 6 in Figures 2 and 4) has slight ringing (Figure 4), compared with the transform of an exponential of order 2 which is another exponential of order 2, and transmits most of the picture information. This thus provides an acceptable filter characteristic.

In these cases $\sigma$ (see Figure 2) is determined when the frequency to be suppressed has been found using the methods described above. $\sigma$ is set such that when x equals the frequency to be suppressed $y/y_{max} < 10^{-4}$.

Two examples of apparatus for carrying out the invention are illustrated in Figures 8A and 8B. The apparatus shown in Figure 8A comprises a conventional analyse scanner 10 which scans an original image such as a transparency and generates corresponding digital data representing the colour content of individual pixels of the image. This digital data is transformed from the image or spatial domain into the frequency domain by the fast Fourier transform circuit 11. The output from the circuit 11 is fed to a multiplier 12 where it is multiplied by digital data from a filter store 13 representing a low pass filter, of the kind described above, in the frequency domain. This multiplication involves the contents of each pixel in the frequency domain being multiplied by the content of the equivalent pixel in the filter. The resultant data is inversely transformed by another fast Fourier transform circuit 14 back into the image or spatial domain and the resultant data is sent to a conventional expose scanner to control a laser beam which exposes a record medium.

The filter characteristic is determined by a microcomputer 17 which not only sets the type of filter (exponential, ideal etc) but also its form (as explained above) by determining the screen frequency of the scanned image from the digital data generated by the analyse scanner 10 and setting the filter characteristic so that the percentage of the screen frequency passed is at or below a predetermined level eg. 0.01 %.

An alternative apparatus is shown in Figure 8B having conventional analyse and expose scanners 10, 15, a microcomputer 17, and a filter store 13. In this case, however, the image data from the analyse scanner 10 is processed in the spatial domain by being convolved with a filter, defined also in the spatial domain, by a conventional convolving circuit 16.

It is important to note the difference between the two processes since the convolution of a filter with the image will take much longer due to the greater number of computations than the multiplication and transformation of data illustrated in Figure 8A. Typically, the number of computations required for convolution is $N^4$ where N is the number of pixels in the side of a square portion of the half-tone image while the number of computations carried out in the Figure 8A apparatus is $(N\log_2 N)^2$.

## Claims

1. Apparatus for processing a first image represented by digital data and constituted by a second image convolved with a periodic function, to produce the second image, the apparatus comprising means (17) for determining a frequency filter characteristic adapted substantially to suppress the frequency or frequencies of the periodic function; a store (13) for storing digital data defining the frequency filter characteristic; and control means (11 - 14) for applying the filter characteristic to the digital data representing the first image to generate digital data representing the second image.

2. Apparatus according to claim 1, wherein the stored digital data defines the filter characteristic in the spatial domain, in use, the control means (16) being adapted to convolve the digital data representing the first image with the digital filter data.

3. Apparatus according to claim 1, wherein the stored digital data defines the filter characteristic in the frequency domain, the control means (11 - 14) being adapted to transform the first image into the frequency domain to generate transformed image digital data, to multiply the transformed image digital data by the digital filter data to generate filtered digital data, and to transform the filtered digital data back into the spatial domain.

4. Apparatus according to any of claims 1 to 3, wherein the control means comprises a suitably programmed computer.

5. Apparatus according to any of the preceding claims, further comprising second image exposing apparatus (15) responsive to the data representing the second image to cause the second image to be exposed on a record medium.

6. Apparatus according to any of the preceding claims, wherein the filter characteristic prevents the passage of frequencies above the frequency or frequencies of the periodic function.

7. Apparatus according to claim 6, wherein the filter characteristic prevents the passage of substantially all frequencies above the frequency or frequencies of the periodic function.

8. Apparatus according to claim 6 or claim 7, wherein the filter characteristic defines an exponential low pass filter.

9. A method of processing a first image represented by digital data and constituted by a second image convolved with a periodic function, to produce the second image, the method comprising generating in accordance with the frequency or frequencies of the periodic function digital data defining a frequency filter characteristic adapted substantially to suppress the frequency or frequencies of the periodic function, and storing the data; and applying the filter characteristic to the digital data representing the first image to generate digital data representing the second image.

10. A method according to claim 9, wherein the stored digital data defines the filter characteristic in the spatial domain, the step of applying the filter characteristic comprising convolving the digital data representing the first image with the digital filter data.

11. A method according to claim 9, wherein the stored digital data defines the filter characteristic in the frequency domain, the step of applying the filter characteristic comprising transforming the first image into the frequency domain to generate transformed image digital data, multiplying the transformed image digital data by the digital filter data to generate filtered digital data, and transforming the filtered digital data back into the spatial domain.

12. A method according to any of claims 9 to 11, wherein the generating step comprises generating an exponential filter of the form $y = k \exp(-x/\sigma)^n$

where y is related to the degree of transmission

     k is a constant

     x is a frequency, and

     $\sigma$ is the half width of the exponential

and determining $\sigma$ such that when x is set to the frequency to be suppressed $y/y_{max}$ is less than a predetermined value.

13. A method according to claim 12, wherein the predetermined value is substantially $10^{-4}$.

14. A method according to claim 12 or claim 13, wherein n is less than or equal to 5.

15. A method according to any of claims 9 to 14, wherein the filter characteristic is circularly symmetric.

16. A method according to any of claims 9 to 14, wherein the filter characteristic is adapted substantially to suppress frequencies adjacent to the frequency of the periodic function and frequencies adjacent higher order harmonics of the periodic function frequency.

17. A method according to any of claims 9 to 16, wherein the first image is a half-tone image and the periodic function comprises a screen.

18. A method according to any of claims 9 to 17, further comprising determining the frequency or frequencies to be suppressed by analysing the first image.

19. A method according to claim 18, wherein the frequency to be suppressed is determined by calculating the average power spectrum of the first image.


**Patentansprüche**

1. Vorrichtung zur Verarbeitung einer ersten Abbildung, die durch Digitaldaten dargestellt und durch eine zweite Abbildung gebildet wird, die mit einer periodischen Funktion zur Bildung der zweiten Abbildung gefaltet ist, mit einer Vorrichtung (17) zur Bestimmung einer Frequenzfiltereigenschaft, die im wesentlichen zur Unterdrückung der Frequenz oder Frequenzen der periodischen Funktion geeignet ist; einem Speicher (13) zur Speicherung digitaler Daten, die die Frequenzfiltereigenschaften definieren; und Steuervorrichtungen (11 - 14) zur Anwendung der Filtereigenschaften auf die die erste Abbildung darstellenden Digitaldaten, um Digitaldaten zu erzeugen, die die zweite Abbildung darstellen.

2. Vorrichtung nach Anspruch 1, bei der die gespeicherten Digitaldaten während der Benutzung die Filtereigenschaft in dem räumlichen Bereich definieren, wobei die Steuervorrichtung (16) dazu geeignet ist, die die erste Abbildung darstellenden Digitaldaten mit den digitalen Filterdaten zu falten.

3. Vorrichtung nach Anspruch 1, bei der die gespeicherten Digitaldaten die Filtereigenschaft in dem Frequenzbereich definieren, wobei die Steuervorrichtungen (11 - 14) dazu geeignet sind, die erste Abbildung in den Frequenzbereich zu transformieren, um transformierte Abbildungsdigitaldaten zu erzeugen, die transformierten Digitalabbildungsdaten mit den digitalen Filterdaten zu multiplizieren, um gefilterte Digitaldaten zu erzeugen und die gefilterten Digitaldaten zurück in den räumlichen Bereich zu transformieren.

4. Vorrichtung nach einem der Ansprüche 1 bis 3, bei der die Steuervorrichtung einen entsprechend programmierten Computer enthält.

5. Vorrichtung nach einem der vorhergehenden Ansprüche, mit weiterhin einer eine zweite Abbildung abbildenden Vorrichtung (15), die auf die Daten, die die zweite Abbildung darstellen, anspricht, um die zweite Abbildung auf einem Aufzeichnungsmedium zu exponieren.

6. Vorrichtung nach einem der vorhergehenden Ansprüche, bei der die Filtereigenschaft den Durchlaß von Frequenzen oberhalb der Frequenz oder den Frequenzen der periodischen Funktion verhindert.

7. Vorrichtung nach Anspruch 6, bei der die Filtereigenschaft den Durchlaß von im wesentlichen allen Frequenzen oberhalb der Frequenz oder den Frequenzen der periodischen Funktion verhindert.

8. Vorrichtung nach Anspruch 6 oder 7, bei der die Filtereigenschaft einen exponentiellen Niedrigdurchlaßfilter definiert.

9. Verfahren zur Verarbeitung einer ersten Abbildung, die durch Digitaldaten dargestellt und durch eine zweite Abbildung gebildet wird, die mit einer periodischen Funktion gefaltet ist, um die zweite Abbildung zu erzeugen, wobei das Verfahren folgende Schritte enthält: Erzeugung von Digitaldaten in Übereinstimmung mit der Frequenz oder den Frequenzen der periodischen Funktion, die eine Frequenzfiltereigenschaften definieren, die im wesentlichen zur Unterdrückung der Frequenz oder Frequenzen der periodischen Funktion geeignet ist, und Speichern der Daten; und Anwenden der Filtereigenschaft auf die Digitaldaten, die die erste Abbildung darstellen, um Digitaldaten zu erzeugen, die die zweite Abbildung darstellen.

10. Verfahren nach Anspruch 9, bei dem die gespeicherten Digitaldaten die Filtereigenschaft in dem räumlichen Bereich definieren, wobei der Schritt der Anwendung der Filtereigenschaft eine Faltung der die erste Abbildung darstellenden Digitaldaten mit den digitalen Filterdaten enthält.

11. Verfahren nach Anspruch 9, bei dem die gespeicherten Digitaldaten die Filtereigenschaft in dem Frequenzbereich definieren, wobei der Schritt der Anwendung der Filtereigenschaften eine Transformation der ersten Abbildung in den Frequenzbereich enthält, um transformierte digitale Abbildungsdaten zu erzeugen, in dem Schritt weiterhin die Multiplikation der transformierten digitalen Abbildungsdaten mit den digitalen Filterdaten enthalten ist, um gefilterte Digitaldaten zu erzeugen und eine Rücktransformation der gefilterten Digitaldaten in den räumlichen Bereich.

12. Verfahren nach einem der Ansprüche 9 bis 11, bei dem der erzeugende Schritt die Bildung eines exponentiellen Filters der Form $y = k \exp(-x/\sigma)^n$ beinhaltet,
wobei y auf den Transmissionsgrad bezogen wird,
k eine Konstante ist,
x die Frequenz, und
$\sigma$ die halbe Weite der Exponentialgröße ist und $\sigma$ so bestimmt wird, daß, wenn x auf die zu unterdrückende Frequenz eingestellt wird, $y/y_{max}$ geringer als ein vorherbestimmter Wert ist.

13. Verfahren nach Anspruch 12, bei dem der vorherbestimmte Wert im wesentlichen $10^{-4}$ ist.

14. Verfahren nach Anspruch 12 oder 13, bei dem n kleiner oder gleich 5 ist.

15. Verfahren nach einem der Ansprüche 9 bis

14, bei dem die Filtereigenschaft kreissymmetrisch ist.

16. Verfahren nach einem der Ansprüche 9 bis 14, bei dem die Filtereigenschaft im wesentlichen dazu geeignet ist, Frequenzen, die der Frequenz der periodischen Funktion benachbart sind und solche Frequenzen zu unterdrücken, die benachbart zu Oberschwingungen höherer Ordnung der periodischen Funktionsfrequenz sind.

17. Verfahren nach einem der Ansprüche 9 bis 16, bei dem die erste Abbildung eine Halbtonabbildung ist und die periodischen Funktion ein Raster enthält.

18. Verfahren nach einem der Ansprüche 9 bis 17, bei dem weiterhin die Frequenz oder Frequenzen, die unterdrückt werden sollen, durch Analyse der ersten Abbildung bestimmt werden.

19. Verfahren nach Anspruch 18, bei dem die zu unterdrückende Frequenz durch Berechnung des durchschnittlichen Leistungsspektrums der ersten Abbildung bestimmt wird.

**Revendications**

1. Appareil de traitement d'une première image représentée par des données numériques et composée par une seconde image enroulée avec une fonction périodique, afin de produire la seconde image, cet appareil se composant d'un dispositif (17) de définition d'une caractéristique de filtrage de fréquence adapté essentiellement pour filtrer la ou les fréquence(s) de la fonction périodique; une mémoire (13) d'enregistrement des données numériques définissant la caractéristique de filtrage de fréquence; et un dispositif de commande (11 - 14) d'application de la caractéristique de filtrage aux données numériques représentant la première image afin de générer les données numériques représentant la seconde image.

2. Appareil selon la revendication 1, où les données numériques mémorisées définissent la caractéristique de filtrage dans le domaine spatial, en utilisation, le dispositif de commande (16) étant adapté pour enrouler les données numériques représentant la première image avec les données numériques de filtrage.

3. Appareil selon la revendication 1, où les données numériques mémorisées définissent la caractéristique de filtrage dans le domaine de fréquence, le dispositif de commande (11 - 14) étant adapté pour transformer la première image dans le domaine de fréquence pour générer des données numériques d'image transformée, pour multiplier les données numériques d'image transformée par les données numériques de filtrage afin de générer des données numériques filtrées, et afin de retransformer les données numériques filtrées dans le domaine spatial.

4. Appareil selon l'une quelconque des revendications 1 à 3, où le dispositif de commande comporte un ordinateur à programme approprié.

5. Appareil selon l'une quelconque des revendications précédentes, comprenant de plus un appareil d'exposition de seconde image (15) réagissant aux données représentant la seconde image afin de provoquer l'exposition de cette seconde image sur un substrat d'enregistrement.

6. Appareil selon l'une quelconque des revendications précédentes, où la caractéristique de filtrage empêche le passage de fréquences au-dessus de la ou des fréquence(s) de la fonction périodique.

7. Appareil selon la revendication 6, où la caractéristique de filtrage empêche le passage essentiellement de toutes les fréquences au-dessus de la ou des fréquence(s) de la fonction périodique.

8. Appareil selon la revendication 6 ou la revendication 7, où la caractéristique de filtrage définit un filtre passe-bas exponentiel.

9. Méthode de traitement d'une première image représentée par des données numériques et composée par une seconde image enroulée avec une fonction périodique, afin de produire la seconde image, cette méthode comprenant la génération selon la ou les fréquence(s) des données numériques de fonction périodique définissant une caractéristique de filtrage de fréquence essentiellement adaptée pour éliminer la ou les fréquence(s) de la fonction périodique, et la mémorisation des données; et l'application de la caractéristique de filtrage aux données numériques représentant la première image afin de générer des données numériques représentant la seconde image.

10. Méthode selon la revendication 9, où les données numériques mémorisées définissent la caractéristique de filtrage dans le domaine spatial, l'étape d'application de la caractéristique de filtrage comprenant l'enroulement des données numériques représentant la première image avec les données numériques de filtrage.

11. Méthode selon la revendication 9, où les données numériques mémorisées définissent la caractéristique de filtrage dans le domaine de fréquence, l'étape d'application de la caractéristique de filtrage comprenant la transformation de la première image dans le domaine de fréquence afin de générer des données numériques d'image transformée, la multiplication des données numériques d'image transformée par les données numériques de filtrage afin de générer des données numériques filtrées, et la retransformation des données numériques filtrées dans le domaine spatial.

12. Méthode selon l'une quelconque des revendications 9 à 11, où l'étape de génération comporte un filtre exponentiel se présentant sous la forme $y = k \exp(-x/\sigma)^n$
où   y est lié au degré de transmission
    k est une constante
    x est une fréquence et
    $\sigma$ est la mi-largeur de l'exponentiel
et définissant $\sigma$ de telle sorte que lorsque x est réglé sur la fréquence à éliminer $y/y_{max}$ est inférieur à la valeur prédéterminée.

13. Méthode selon la revendication 12, où la valeur prédéterminée est essentiellement 10 - 4.

14. Méthode selon la revendication 12 ou la revendication 13, où n'est inférieur ou égal à 5.

15. Méthode selon l'une quelconque des revendications 9 à 14, où la caractéristique de filtrage est symmétrique dans un plan circulaire.

16. Méthode selon l'une quelconque des revendications 9 à 14, où la caractéristique de filtrage est essentiellement adaptée pour éliminer les fréquences adjacentes à la fréquence de la fonction périodique et les fréquences adjacentes à des harmoniques d'ordre supérieur de la fréquence de fonction périodique.

17. Méthode selon l'une quelconque des revendications 9 à 16, où la première image est une image en demi-teinte et où la fonction périodique comporte un écran.

18. Méthode selon l'une quelconque des revendications 9 à 17, comprenant de plus la définition de la ou des fréquence(s) devant être supprimées par analyse de la première image.

19. Méthode selon la revendication 18, où la fréquence à supprimer est déterminée par le calcul de la puissance spectrique moyenne de la première image.

Fig.1A.

Fig.1B.

# Fig.2.

# Fig.3.

*Fig.4.*

TRANSMISSION

FREQUENCY

SCREEN
FREQUENCY

*Fig.5.*

# Fig.6.

# Fig.7.

Trans
1·0

# Fig.8A.

```
ANALYSE    —10        —11         —12         —14        —15
SCANNER  ——  FFT  ——  MULTIPLIER  ——  FFT  ——  EXPOSE
                                                 SCANNER

                                    —13
CPU  —17             FILTER
                     STORE
```

# Fig.8B.

```
ANALYSE   —10      —16                —15
SCANNER  ——  CONVOLVER  ——  EXPOSE
                            SCANNER

                   —13
CPU  —17     FILTER
             STORE
```

7